# DEMANDE DE BREVET EUROPEEN

(11) **EP 0 638 447 A1**
(43) Date de publication de la demande: **15.02.1995**
(21) Numéro de dépôt: 93830331.0
(22) Date de dépôt: 27.07.1993
(51) Int. Cl.: B60C 27/16

(54) **Chaîne antineige**

(71) Demandeur: Romanato, Giovanni, I-13041 Bianze (Vercelli) (IT)
(72) Inventeur: Romanato, Giovanni, I-13041 Bianze (Vercelli) (IT)

(57) **Abrégé**

Résumé du brevet: l'antineige "Summit" est original pour sa structure particulière et pour ses variations de couleurs et de grandeur.

De plus, il permet une rapide et particulière familiarité dans la pose et dans le désassamblage.

Son originalité consiste dans le fait qu'outre à consentir une excellente et sûre stabilité sur la glace et la neige, il donne beaucoup de sécurité; il l'a démontré dans toutes les épreuves exécutées sur des terrains accidentés et enneigés.

## Description

L'antineige "Summit" avec de pattes cloutées est très original pour sa structure particulière en p.c.v. flexible avec des filets internes de nylon; de plus, il permet une rapide et particulière familiarité pour ce qui concerne la pose sur n'importe quel type de roues.

Son originalité consiste dans le fait que, outre à consentir une bonne et meme parfaite stabilité sur des routes verglacées ou avec de la neige fraîche, il donne une excellente sécurité.

Le cloutage appliqué sur les pattes en p.v.c. flexible avec le filet en nylon n'abîme absolument pas l'enveloppe et même pas l'asphalte étant donné sa particulière flexibilité.

De suite on dresse une liste de description du dessin, pièce ci-jointe.

La fig. n° 1 représente le système de la forme de la patte cloutée avec les éléments relatifs qui ont subi des modifications par rapport au dessin précédent.

N° de 6 ° 8 clous, avec relatif déplacemnet des mêmes clous; avec élimination de la cale en forme de cône.

La figure n° 1 représente le composé de la patte porte clous en p.v.c. avec filets internes en nylon-

La fig. n° 1 représente l'actuelle chaîne en anneaux flexibles d'étanchéité ou son lacement est fait par un crochet mouspueton Fig. 1.

La pose complète de l'exceptionnel antineige "Summit" comprend le tendeur de la chaîne la térale externe par l'anneau élastifié avec des crochets d'étanchéité de forme hexagonals et ronds.

## Revendications

1. Titre de la revendication avec des modifications du dessin précédent.
Cette description représente le noveau brevet "Antineige Summit" avec les récentes modifications beaucoup plus appropriées et sûres que le modèle précédent "Panzer" déposé le II.05.90.
Liste de modifications:
Mod. I dans la fig. I: il représente la modification du système précédent; la patte porte clous est exécutée en p.c.v. avec un filet interne de nylon et non avec du caoutchouc toile-cordée.
Mod. 2 dans la fig. I il représente encore la nouvelle position du cloutage; le numero varie de 6 à 8 clous.
Mod. 3 dans la fig. I: il représente encore la modification en remplacement avec l'actuelle chaîne en anneaux flexibles, du câble flexible, avec l'adjonction de n°14 bandes métalliques introduites dans le volet collé de la patte porte clous;
l''étanchéité ou le lacement est fait par un crochet mousqueton dans la fig. I
Mod. 4 dans la fig. I: il représente le crochet mousqueton qui remplace le crochet précédent à pression pour le lacement.
Mod. 5 dans la fig. 2: il représente les deux côtés de la patte non plus rivée, mais collés avec une colle particulière.
La fig. n° 3 indique la pose complète du système actuel antineige "Summit" et il comprend le tendeur de la châine latérale par l'anneau en caoutchouc de forme hexagonale et ronde avec les crochets relatifs. Fig. 4
